# EUROPEAN PATENT APPLICATION

(11) **EP 4 712 276 A1**
(43) Date of publication of application: **18.03.2026**
(21) Application number: 24200562.7
(22) Date of filing: 16.09.2024
(51) Int. Cl.: H01R 27/02, B60D 1/64

(54) **EXPANDED CONNECTOR PLUG, SOCKET AND SYSTEM**

(71) Applicant: Phillips Europe Spolka z Ograniczona Odpowiedzialnoscia, 95-082 Chechlo Pierwsze (PL)
(72) Inventor: Peterson, Thomas Dale, Wilsonville (US); Slowinska, Pamela, Pabianice (PL); Bajewski, Kamil, Zdunska Wola (PL)
(74) Representative: JWP Patent & Trademark Attorneys

(57) **Abstract**

The present invention relates to expanded electrical connector plug, socket and system in particular to an expanded truck-trailer connector for use, for example between a truck tractor or tractor and a semi-trailer, trailer, tanker or other body vehicle. The expanded connector system, plug the expanded connector plug (1) for a connection between a towing vehicle and a trailer, comprises a primary connector plug portion (2) configured to connect to a primary connector socket portion and to provide a first set of electrical connections and a low-speed communication link between the towing vehicle and the trailer. Accordingly, to complete the connection a primary connector socket portion is configured to connect to a primary connector plug portion (2) and to provide a first set of electrical connections and a low-speed communication link between the towing vehicle and the trailer. At least two separate secondary connector plug portions (3) are configured to connect to at least two separate secondary connector socket portion and to provide a second set of electrical connections and in particular a high-speed communication link between the towing vehicle and the trailer. Accordingly, to complete the connection at least two separate secondary connector socket portions are configured to connect to two secondary connector plug portions (3) and to provide the second set of electrical connections and in particular a high-speed communication link between the towing vehicle and the trailer.

## Description

The present invention relates to an expanded connector plug, socket and system. The expanded connector plug and the expanded connector socket, which, in conjunction with a connector cable, constitute the expanded plug-socket connector system and, in particular to an expanded truck-trailer connector for use, for example between a truck tractor or tractor and a semi-trailer, trailer, tanker or other body vehicle.

The expanded truck-trailer connector system is a pivotal component in ensuring the safe and efficient operation of a truck-trailer combination. It facilitates the transfer of power and electronic signals between the truck and trailer, which is essential for synchronized functioning of lights, brakes, and other systems. ISO standards, such as ISO 1185, ISO 3731, ISO 7638-1 and ISO 12098, provide guidelines for the connectors' design, ensuring compatibility and safety across different vehicles and trailers. Innovations in this field are propelling the industry forward by integrating advanced truck and trailer technologies to enhance safety and efficiency. These systems not only improve the current state of vehicular operations but also pave the way for the future of autonomous and electric vehicles, highlighting the importance of a well-designed connector system in the evolution of transportation technology.

There are known solutions in a field of transportation systems to improve communication between towing vehicles and trailers. Currently, wired communication interfaces primarily exchange digital information, but the increasing demand for autonomous vehicles and advanced electronics requires a faster and more reliable transmission of data. While existing charging systems and braking systems provide some communication, they are limited in data rate and lack the necessary bandwidth for future technologies.

The increasing adoption of autonomous vehicles demands faster and more reliable transmission of digital information. To meet this need, new communication systems are emerging, such as advanced wired and wireless interfaces.

With the increasing reliance on electronics in the automotive industry, truck-trailer links require more electric power and data bandwidth. To ensure smooth integration, the communication interfaces of towing vehicles and trailers should be backward compatible.

Current technologies for electronically controlled braking systems (ABS, EBS) and running gear equipment (steering, suspension, tires) rely on limited data rates (125 kbit) and standardized messages. This restricts the ability to handle the growing demand for data in modern vehicles. While adding a second CAN line theoretically increases the data rate (1 Mb), it is still insufficient.

To overcome these limitations, a new system is needed that can connect the communication interfaces of towing vehicles and trailers with backward compatible connectors. This system should provide a seamless transition for all stakeholders (end users, fleets, manufacturers, suppliers) and offer redundant high-speed communication and power supply capabilities.

The ISO12098 was introduced to replace the 24N and 24S (ISO 1185/ISO 3731) connectors, but the industry failed to fully eliminate the 24N and 24S with the ISO12098. The cost of upgrading existing equipment to the ISO12098 standard coupled with the rising cost of new equipment with the standard meant fleets almost always had a "mixed bag" of trucks and trailers (especially trailers). +20 years after its introduction, 20% of trailers in the EU are STILL produced with 24N and 24S sockets.

Replacing the old standard with a new one may be cumbersome. It results in adding yet another connector position to the front of the trailer, meaning re-design of the existing socket plates/nose boxes and their packaging. It also adds complexity to the wiring harness of the trailer in the form of additional junction boxes and relays. It is important to note that Ethernet is NOT conducive to junction box-style connections (1Gb/sec AND 10G/sec.). Often it is also expanded with addition of an intelligent distributed control module that differentiates and prioritizes incoming communication from different connectors.

Furthermore, the complexity of adding another connector to the front of the trailer cannot be understanded from the driver perspective. EU drivers generally already look at (4) electrical connectors and (2-4) air connectors on a trailer prior to hook up - consider the confusion when yet another electrical connection point is added to the mix. Adapters have proven ineffective in reduction of confusion and getting drivers to utilize the added benefits of more advanced connectors as they are commonly left in "the glove box" of the truck or at the last trailer they were pulled with.

The current solutions on the market consist of a standard electrical connection for supplying lighting and auxiliary circuits. If the customer requires cameras on the towed vehicle, they must use a separate connection to support high speed data for the camera. It is an inconvenience having multiple cables connecting the truck to the towed vehicle. The solution is to combine, trailer lighting, auxiliary circuits, and ethernet into one connection. The current proposal from FAT VDA AK9 committee is the AK9 connector which is an additional connector to allow for ethernet to be used between the truck and trailer. This means that if the AK9 connector is selected as the standard without backwards compatibility to ISO12098, trailer manufacturers will almost certainly have to do the following to accommodate for the legacy ISO12098, 24N and 24S and ISO 7638-1 :
The patent US11303078 B2 disclose an electrical connector with enhanced data communication. The disclosure provides the electrical connector including a connector plug and a connector socket in compliance with an industry standard. The connector socket includes a plurality of male contact terminals, and the connector plug includes a corresponding plurality of female contact terminals. The connector plug and the connector socket include a secondary electrical connection to support bidirectional data communication between a tractor vehicle and a trailer vehicle with greater bandwidth. The secondary electrical connection can include an additional electrical contact within a male part for engaging an additional electrical pin within a female part, wherein the male part and the female part are joined to, but laterally offset from, the connector plug and the connector socket. Alternatively, or in addition, the secondary electrical connection can include a conductive strip on an exterior annular surface of the connector plug and a corresponding electrical contact on an interior annular surface of the socket opening.

The US2024186756A1 patent application discloses an expanded connector plug for a connection between a towing vehicle and a trailer. The expanded connector plug includes a first connector plug portion configured to connect to a first connector socket portion and to provide a first power supply and low-speed communication link between the towing vehicle and the trailer. It also includes a second connector plug portion configured to connect to a second connector socket portion and to provide a second power supply and a high-speed communication link between the towing vehicle and the trailer. The high-speed communication link provides a transmission rate that is higher than the low-speed communication link. The first connector plug portion is configured to connect to the first connector socket portion even if the second connector plug portion is not connected to the second connector socket portion. The invention offers improved electric power and data bandwidth for truck-trailer links by including additional redundant power and communication lines. It also allows for backward compatibility with existing systems.

In both solutions the additional data connector (second connector) socket is placed in linear offset from the main connector, but due to working conditions of the connecting cable such a solution is vulnerable to disconnecting momenta and forces. The moment created by the mass of the cable attached to the socket to be directed onto the legacy connector portion of the socket/receptacle and not the more delicate data connectors (additional connector).

Placing the data connectors on the side or top of the socket/receptacle alleviates design changes from having to be made to the locking mechanism - significantly complicating backwards compatibility.

This invention tackles these problems by proposing an expanded connector plug and socket system with a high-speed communication links, exceeding the limitations of current systems. This system is backward compatible with existing systems and standards, ensuring a smooth transition for all users. The invention provides a solution for improving the connection's resistance to interruption due to operating conditions. The design also provides greater resistance to possible disruption during disconnection and connection, providing easy handling and a secure connection fully compatible with existing solutions.

The problems as described before are overcome by an expanded connector plug of claim 1 and an expanded connector socket of claim 7, or an expanded plug-socket connector system according to claim 12. The dependent claims refer to further advantageous realizations of the subject matter of the independent claims.

The present invention relates to an expanded connector plug (1) for a connection between a towing vehicle and a trailer. The expanded connector plug (1) comprises: a primary connector plug portion (2) configured to provide a first set of electrical connections between the towing vehicle and the trailer; and at least two separate secondary connector plug portions (3) configured to provide a second set of electrical connections between the towing vehicle and the trailer. Separate secondary connector plug portions refer to secondary connector plug portions that are not combined into a single unit but are instead spaced apart from each other. The primary connector plug portion (2) is intended to connect to a primary connector socket portion (4). The secondary connector plug portions (3) are intended to connect to secondary connector socket portions (5). The first set of electrical connections preferably includes a low-speed communication link. The second set of electrical connections preferably includes a high -speed communication link. Preferably, the high-speed communication link provides a transmission rate that is higher than for the low-speed communication link. The primary connector plug portion (2) is preferably configured to connect to the primary connector socket portion (4) even if the secondary connector plug portion (3) is not connected to at least one secondary connector socket portion (5). The separate secondary connector plug portions (3) are placed symmetrically on each side of the primary connector plug portion (2) with respect to the axis of symmetry that passes through the longitudinal axis of the primary connector plug portion (2). Preferably, the secondary connector plug portions (3) are placed at least half the diameter of the primary connector plug portion (2) from each other and preferably in the proximity of the circumference of the primary connector plug portion (2).

Preferably the primary connector plug portion (2) is in conformity with ISO 12098 or ISO 7638-1.

Optionally, two separate secondary connector plug portions (3) are placed symmetrically on each side of the primary connector plug portion (2) in the upper part of the primary connector plug portion (2), where the upper part is the part that is directed upwards in vertical direction during use.

Optionally, the secondary connector plug portion (3) comprises:
- a body, a front end and a rear end;
- a recess integrated into the front end of the secondary connector plug portion (3), which contains electrical terminals, preferably data terminals, and/or auxiliary terminals situated within the recess;
- a receiving surface located at the rear end of the secondary connector plug portion (3);
- a coaxial cable connector or a twisted pair connector to facilitate a high-speed communication link suitable for data rates exceeding 100 Mbit per second, preferably 2Gbit per second, more preferably 20Gbit per second, the most preferably 40Gbit per second.

Preferably on the outer edge of the front end is placed a flange with weatherproof sealing (7).

Preferably the twisted pair connector is suitable to connect with standardized LAN CAT6, CAT6a, CAT7 and/or CAT7a cable.

Optionally, in a recess of the secondary connector plug portion (3), there is movable element integrated into the front end of the secondary connector plug portion (3), that allows rotational movements of terminals within the body of the secondary connector plug portion (3) while being inserted so that fine alignment matches of the terminal connectors.

Preferably the data communication between the tractor vehicle and the trailer vehicle forms part of a CAN network or an Ethernet network.

Optionally, the expanded connector plug (1) includes a non-conductive body of the primary connector plug portion (2) and of the secondary connector plug portions (3).

The present invention also relates to an expanded connector socket (6) for a connection between a towing vehicle and a trailer. The expanded connector socket (6) comprises: a primary connector socket portion (4) configured to provide a first set of electrical connections between the towing vehicle and the trailer; and at least two separate secondary connector socket portions (5) configured to provide a second set of electrical connections between the towing vehicle and the trailer. Separate secondary connector socket portions refer to secondary connector socket portions that are not combined into a single unit but are instead spaced apart from each other. The primary connector socket portion (4) is intended to connect to a primary connector plug portion (2). The secondary connector socket portions (5) are intended to connect to secondary connector plug portions (3). The first set of electrical connections preferably includes a low-speed communication link. The second set of electrical connections preferably includes a high-speed communication link. Preferably, the high-speed communication link provides a transmission rate that is higher than for the low-speed communication link. The primary connector socket portion (4) is preferably configured to connect to the primary connector plug portion (2) even if the secondary connector socket portion (5) is not connected to at least one secondary connector plug portion (3). The separate secondary connector socket portions (5) are placed symmetrically on each side of the primary connector socket portion (4) with respect to the axis of symmetry that passes through the longitudinal axis of the primary connector socket portion (4). Preferably, the secondary connector socket portions (5) are placed at least half the diameter of the primary connector socket portion (4) from each other and preferably in the proximity of the circumference of the primary connector socket portion (4).

Preferably the primary connector socket is in conformity with ISO 12098 or ISO 7638-1.

Optionally, two secondary connector socket portions (5) are placed symmetrically on each side of the primary connector socket portion (4) in the upper part of the primary connector socket portion (4), where the upper part is the part that is directed upwards in vertical direction during use.

Optionally, the secondary connector socket portion (5) comprises:
- a body, a front end and a rear end;
- a recess integrated into the front end of the secondary connector socket portion (5), which contains electrical terminals, preferably data terminals, and/or auxiliary terminals situated within the recess;
- a receiving surface located at the rear end of the secondary connector socket portion (5);
- a coaxial cable connector or a twisted pair connector at the rear end to facilitate a high-speed communication link suitable for data rates exceeding 100 Mbit per second, preferably 2Gbit per second, more preferably 20Gbit per second, the most preferably 40Gbit per second.

Preferably the twisted pair connector is suitable to connect with standardized LAN CAT6, CAT6a, CAT7 and/or CAT7a cable.

Optionally, in a recess of the secondary connector socket portion (5), there is movable element integrated into the front end of the secondary connector socket portion (5), which allows rotational movements of terminals within the body of the secondary connector socket portion (5) while being inserted so that fine alignment matches of the terminal connectors.

Preferably the data communication between the tractor vehicle and the trailer vehicle forms part of a CAN network or an Ethernet network.

Optionally, the expanded connector socket includes a non-conductive body of the primary connector plug portion (2) and of the secondary connector socket portions (5).

The invention also relates to an expanded plug-socket connector system comprising the expanded connector plug (1) according to the invention and/or the expanded connector socket (6) according to the invention.

Optionally, the expanded connector socket (6) includes a protective lid to removably cover the primary connector socket portion (4) and/or the secondary connector socket portions (5), when not engaged with the respective plugs.

Optionally, the protective lid is biased in the closed position by a spring-loaded hinge.

Optionally, the protective lid is operatively joined to a thumb latch, such that depression of the thumb latch acts causes the protective lid to rotate about the spring-loaded hinge to an open position.

Optionally, the expanded connector plug (1) further includes an attachment arm coupled between the protective lid and the thumb latch.

The new connection is based on the existing connection according to the ISO 12098 standard but is extended with additional Internet communication functionality. The Internet connectors (connectors data) are located outside the space of the electrical connection according to the ISO 12098 standard. This feature could also easily be adopted to accommodate the ISO 7638-1 standard as well. The main advantage of this solution is that the current standard (compliant with ISO 12098) if any facility does not have the ability to receive Internet communications. This means this means that the new product has so-called "backward compatibility" to the current version. An important element of the of the new connection is the speed of data transmission - currently 1 Gbps, but it is possible to extend it to 10 Gbps in the near future.

As far as the focus of the invention, these are the advantages of the invention:
The invention is backwards compatible with existing ISO12098 or ISO 7638-1 connector (broadly used in EU) - meaning the invention will plug into an ISO12098 (or ISO 7638-1) receptacle and an ISO12098 (or ISO 7638-1) plug will plug into an invention receptacle.

Position of Ethernet connectors on the top of the plug/receptacle allows to prevent interference with the locking mechanism of standard ISO connector. Receptacle mounting scheme is similar to that of the ISO12098 (or ISO 7638-1) connector to promote easy exchange for an invention when ISO12098 (or ISO 7638-1) is present.

Position of data connectors within secondary connector plug/socket portions on both sides of primary connector helps to prevent disconnecting the data connection caused by momenta and forces applied to the primary connector during use. The primary connector may by stressed by the weight and tension by the connecting cable. Placing secondary connectors out of main vertical axis helps to strengthen and make more reliable the data connection. Moreover, the placing of the data connections on both sides helps to increase redundancy and thus elevate the reliability of data connections.

The addition of high speed data connectors to the existing standard connector i.e. ISO 12098 (or ISO 7638-1) provides a single tractor to trailer interface that supports all necessary connections, trailer lighting, auxiliary power and high speed data. The challenges overcome in the development of this invention include complicated wire routing through the connector, coming up with a reliable means of weatherproofing the connection, and difficulty in shielding the data connection from Electromagnetic Interference.

The modular data connectors are designed to have field replaceable connector inserts, should the connection become damaged in the field.

The data connectors are designed to self-align (twist 5 degrees in either direction) in the case of misalignment.

Backward compatibility of the ISO 12098 (or ISO 7638-1) connector (this means a legacy ISO12098 (or ISO 7638-1) socket will fit into an invention receptacle AND an invention Socket will fit into a legacy ISO12098 (or ISO 7638-1) receptacle.

The position of the Ethernet connectors on the top of the existing ISO 12098 (or ISO 7638-1) socket allows for:
- The lid of the receptacle to properly seat on the socket of either the invention and or the ISO12098 (or ISO 7638-1) socket.
- The moment created by the mass of the cable attached to the socket (in the downward direction) to be directed onto the legacy 12098 (or ISO 7638-1) portion of the socket/receptacle and not the more delicate ethernet connectors.
- The mounting strategy of the receptacle to the truck or trailer to be similar in nature to that of the legacy ISO12098 (or ISO 7638-1) - allowing for an easier transition and less adapters.
- The sensitive ethernet wires/conductors to be separated and better shielded form the current carrying wires in the ISO12098 (or ISO 7638-1) portion of the invention to better control EMC interference, assembly and allow for separate shielding.
- Tooling modifications required the manufacturer the invention utilizing legacy tooling to be less significant, installing the ethernet connectors in any other location requires lid and ethernet connector area tooling changes, where in this embodiment, only one section of the tool has to be modified (the top is where the lid and ethernet connectors are).
- Placing the ethernet connectors on the top of the socket/receptacle alleviates design changes from having to be made to the locking mechanism - significantly complicating backwards compatibility.

Another advantage of the invention is the use of standardized LAN (CAT6, 6a, 7 and 7a) cable consisting of 4 twisted pairs (shielded or unshielded). The use of this cable is not obvious as other alternatives utilized non-standardized cables in order to meet the minimum necessity of 2 twisted pairs - however this approach requires custom cable to be manufactured, requiring new tooling, testing and even in some cases new materials to be developed. The invention was designed to work with off-the-shelf ethernet cable.

Some examples of the expanded plug connectors, socket connectors and the expanded plug-socket connector system will be described in the following by way of examples only, and with respect to the accompanying figures, in which:
Fig. 1 shows an expanded connector plug (1) according to an embodiment of the present invention;
Fig. 2 shows the expanded connector plug (1) in a face view according to an embodiment of the present invention;
Fig. 3 shows the expanded connector plug (1) according to an embodiment of the present invention with present protective lids on secondary plug connector portions;
Fig. 4 shows a side view of the expanded connector plug (1) according to an embodiment of the present invention;
Fig. 5 shows an expanded connector socket (6) according to another embodiment of the present invention;
Fig. 6 shows a side view expanded connector socket (6) according to another embodiment of the present invention;
Fig. 7 shows the expanded connector socket (6) in a face view according to an embodiment of the present invention;
Fig. 8 shows the expanded connector socket (6) in a face view according to an embodiment of the present invention with present protective lids on secondary plug connector portions.

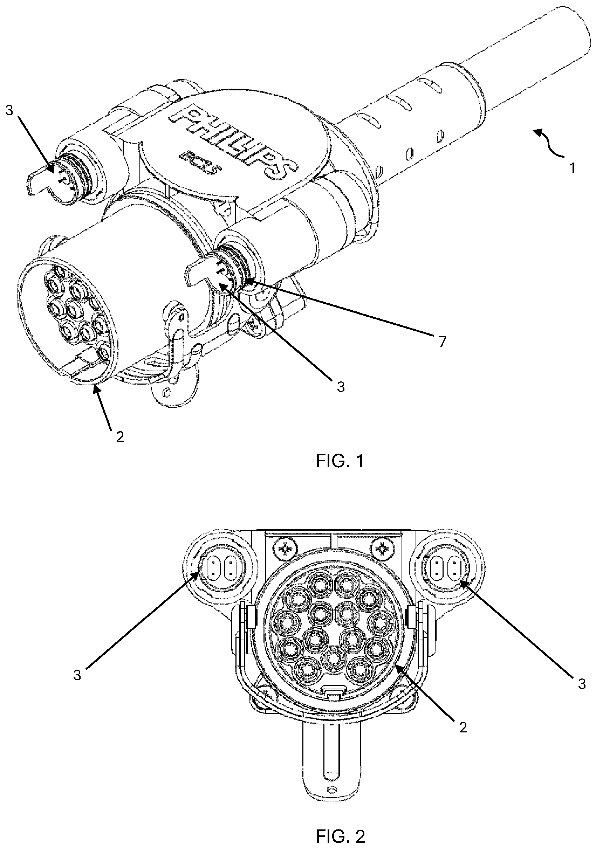

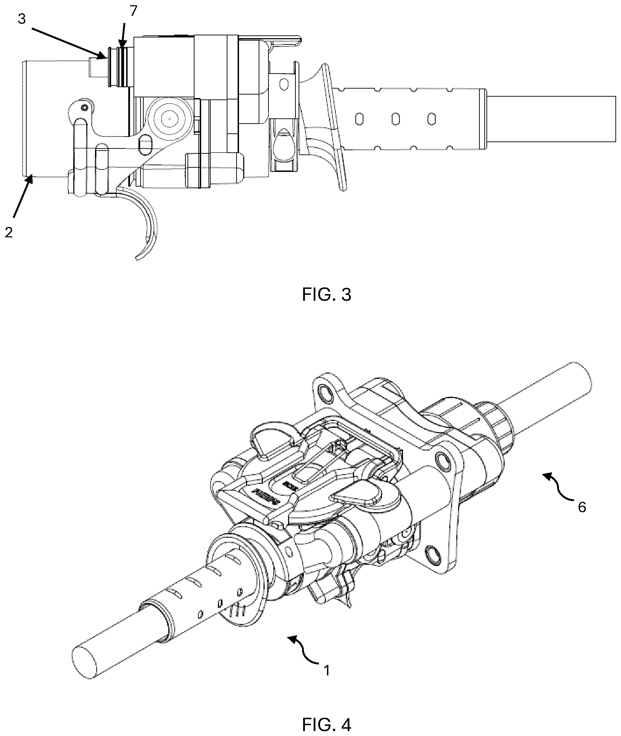

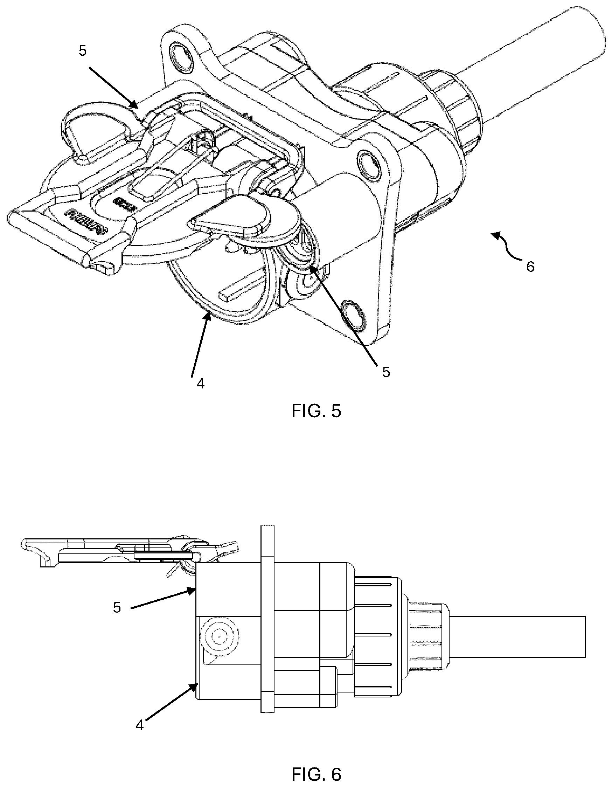

The example of the expanded connector plug (1) for a connection between a towing vehicle and a trailer, comprises a primary connector plug portion (2) configured to connect to a primary connector socket portion (4) and to provide a first set of electrical connections and a low-speed communication link between the towing vehicle and the trailer (Fig. 1-4). Accordingly, to complete the connection the primary connector socket portion (4) is configured to connect to the primary connector plug portion (2) and to provide the first set of electrical connections and the low-speed communication link between the towing vehicle and the trailer (fig. 5-8). The primary connector plug and socket is mend to be in conformity with ISO 12098, what satisfies the need for backward compatibility. It may be also compatible with any earlier standard.

Further in this example two separate secondary connector plug portions (3) are configured to connect to two separate secondary connector socket portion (5) and to provide a second set of electrical connections and in particular a high-speed communication link between the towing vehicle and the trailer. Accordingly, to complete the connection two separate secondary connector socket portions (5) are configured to connect to two secondary connector plug portions (3) and to provide the second set of electrical connections and in particular the high-speed communication link between the towing vehicle and the trailer. The high-speed communication link provides a transmission rate that is higher than for the low-speed communication link and it is 100 Mbit/s. In some aspects of this example this speed is 2 Gbit/s, 20 Gbit/s or 40 Gbit/s.

The primary connector plug portion (2) is configured to connect to a primary connector socket portion (4) even if the secondary connector plug portion (3) is not connected to at least one secondary connector socket portion (5), what is possible when there is only primary connector socket.

The two secondary connector plug portions (3) are placed symmetrically on each side of the primary connector plug portion (2) with respect to the axis of symmetry that passes through the longitudinal axis of the primary connector plug portion (2). The two secondary connector plug portions (3) are placed at the distance of the diameter of the primary connector plug portion (2) from each other and in the proximity of the circumference of the primary connector plug portion (2).

The two secondary connector socket portions (5) are placed symmetrically on each side of the primary connector socket portion (4) with respect to the axis of symmetry that passes through the longitudinal axis of the primary connector socket portion (4). The secondary connector socket portions (5) are placed at least half the diameter of the primary connector socket portion (4) from each other and in the proximity of the circumference of the primary connector socket portion (4).

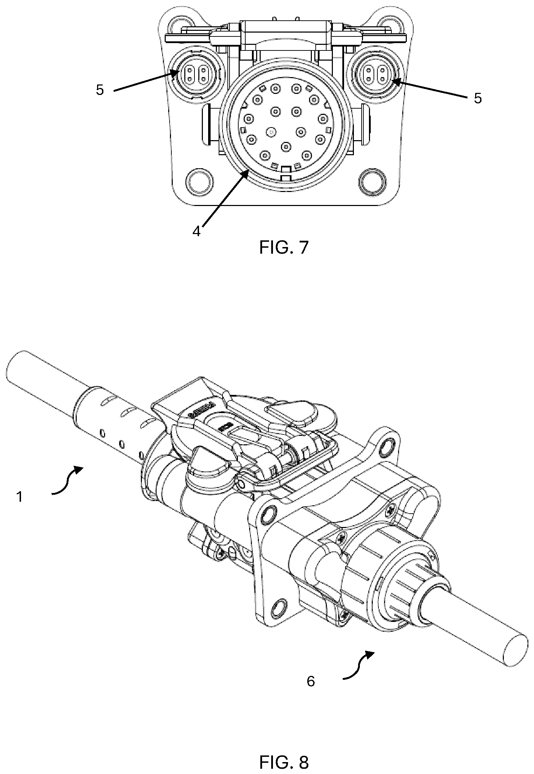

The two secondary connector plug portions (3) are placed symmetrically on each side of the primary connector plug portion (2) in the upper part of the primary connector plug portion (2), where the upper part is the part that is directed upwards in vertical direction during use. Accordingly, two secondary connector socket portions (5) are placed symmetrically on each side of the primary connector socket portion (4) in the upper part of the primary connector socket portion (4), where the upper part is the part that is directed upwards in vertical direction during use. As depicted in the Fig. 2, the secondary connector plug portion (3), and respective secondary connector socket portions (5) (Fig. 7) are aligned with respect to upper edge of the circumference of the primary connector plug and/or socket portions.

The basic structure of the expanded connector plug (1) is based on the standard structure of the primary connector plug (i.e. ISO 12098 plug), next to which two secondary connector plug portions (3) are placed. The secondary connector plug portions (3) are placed on the sides of the primary connector plug portion (2), on both sides of the primary connector plug portion (2), and are arranged symmetrically with respect to the vertical axis that passes through the longitudinal axis of symmetry of the primary connector plug portion (2). Accordingly, is organized the socket, the secondary connector socket portions (5) are placed on the sides of the primary connector socket portion (4), on both sides of the primary connector socket portion (4), and are arranged symmetrically with respect to the vertical axis that passes through the longitudinal axis of symmetry of the primary connector socket portion (4).

The secondary connector plug portion (3) has:
a body, a front end and a rear end;
a recess integrated into the front end of the secondary connector plug portion (3), which contains electrical terminals, preferably data terminals, and/or auxiliary terminals situated within the recess;
a spacing between the body and the circumference of the primary connector plug portion (2);
a second receiving surface located at the rear end of the secondary connector plug portion (3);
a coaxial cable connector or a twisted pair connector to facilitate a high-speed communication link suitable for data rates exceeding 100 Mbit per second. In some aspects of this example this speed is 2 Gbit/s, 20 Gbit/s or 40 Gbit/s. On the outer edge of the front end is placed a flange with weatherproof sealing (7) (Fig. 1).

The expanded connector plug (1) has a special element in a recess, which is integrated into the front end of the secondary connector plug portion (3), and which allows rotational movements of terminals within the body of the secondary connector plug portion (3) while being inserted so that fine alignment matches of the terminal connectors. The adjustment methodology of the ethernet connectors within the socket and receptacle. The connectors are allowed to "twist" within the housing while being inserted so that fine alignment matches of the ethernet connectors due to manufacturing variability are accounted for during connection and do not prevent the socketfrom being inserted into the receptacle.

The data communication between the tractor vehicle and the trailer vehicle forms part of a CAN network or an Ethernet network. The ethernet connectors of the invention are comparably priced to that available in the market and can accommodate far more bandwidth at no expense of durability. Although slightly more complex to manufacture, they are specifically designed to allow the socket/receptacle manufacturer to simply utilize their minimum capability at little to no additional process cost.

The expanded connector plug (1) includes a non-conductive body of the primary connector plug portion (2) and of the secondary connector plug portions (3). The expanded connector socket (6) includes a non-conductive body of the primary connector socket portion (4) and of the secondary connector plug portions (5). In some embodiments there is anticipated a two-piece case design on both plug and socket. It promotes simplified manufacturing and service utilizing a seal between case halves. It allows serviceable pins, including the ethernet pins, that can be serviced by separating the case halves and exchanging bad/broken pins for new ones. Other anticipated feature is single cable exit that includes standard ISO12098 and ethernet conductors. Further it provides a novel shielding scheme inside of plug and receptacle housing to support high internet speeds.

The secondary connector socket portion (5) comprises:
a body, a front end and a rear end;
a recess integrated into the front end of the secondary connector socket portion (5), which contains electrical terminals, preferably data terminals, and/or auxiliary terminals situated within the recess;
a spacing between the body and the circumference of the primary connector socket portion (4);
a receiving surface located at the rear end of the secondary connector socket portion (5);
a coaxial cable connector or a twisted pair connector at the rear end to facilitate a high-speed communication link suitable for data rates exceeding 100 Mbit per second. In some aspects of this example this speed is 2 Gbit/s, 20 Gbit/s or 40 Gbit/s.

The twisted pair connector on the rear end of a body the secondary connector plug portion (3) or secondary connector socket portion (5) is suitable to connect with standardized LAN CAT6, CAT6a, CAT7 and/or CAT7a cable. The use of this cable is not obvious as other alternatives utilized non-standardized cables in order to meet the minimum necessity of two twisted pairs - however this approach requires custom cable to be manufactured, requiring new tooling, testing and even in some cases new materials to be developed. The invention was designed to utilize off-the-shelf ethernet cable.

The use of each of the plug and the socket from previous examples constitute the example of an expanded plug-socket connector system. The expanded plug-socket connector system may be supplemented by inclusion of a protective lid which removably cover the primary connector socket portion (4) and/or the secondary connector socket portions (5), when not engaged with the respective plugs. The protective lid is biased in the closed position by a spring-loaded hinge. The protective lid is operatively joined to a thumb latch, such that depression of the thumb latch acts causes the protective lid to rotate about the spring-loaded hinge to an open position. The expanded connector plug (1) further includes an attachment arm coupled between the protective lid and the thumb latch.

### LIST OF REFERENCE SIGNS

1 expanded connector plug
2 primary connector plug portion
3 secondary connector plug portion
4 primary connector socket portion
5 secondary connector socket portion
6 expanded connector socket
7 weatherproof sealing

## Claims

1. An expanded connector plug (1) for a connection between a towing vehicle and a trailer, comprising:
- a primary connector plug portion (2) configured to provide a first set of electrical connections between the towing vehicle and the trailer; and
- at least two separate secondary connector plug portions (3) configured to provide a second set of electrical connections between the towing vehicle and the trailer.

2. The expanded connector plug (1) of claim 1,wherein the separate secondary connector plug portions (3) are placed symmetrically on each side of the primary connector plug portion (2) with respect to the axis of symmetry that passes through the longitudinal axis of the primary connector plug portion (2).

3. The expanded connector plug (1) of claim 1 or claim 2, **characterized in that** the primary connector plug is in conformity with ISO 12098 or ISO 7638-1.

4. The expanded connector plug (1) according to any of claims 1-3, **characterized in that** the separate secondary connector plug portions (3) are placed in the upper part of the primary connector plug portion (2).

5. The expanded connector plug (1) according to any of claims 1-4, **characterized in that** each secondary connector plug portion (3) comprises a flange with weatherproof sealing (7).

6. The expanded connector plug according to any of claims 1-5, **characterized in that** the twisted pair connector is suitable to connect with standardized LAN CAT6, CAT6a, CAT7 and/or CAT7a cable.

7. The expanded connector plug (1) according to any of claims 1-6, **characterized in that** the first and/or the second set of electrical connections between the tractor vehicle and the trailer vehicle forms part of a CAN network or an Ethernet network or another high-speed communication network.

8. An expanded connector socket (6) for a connection between a towing vehicle and a trailer, comprising:
- a primary connector socket portion (4) configured to provide a first set of electrical connections between the towing vehicle and the trailer; and
- at least two separate secondary connector socket portions (5) configured to provide a second set of electrical connections between the towing vehicle and the trailer.

9. The expanded connector socket (6) of claim 8, wherein the separate secondary connector socket portions (5) are placed symmetrically on each side of the primary connector socket portion (4) with respect to the axis of symmetry that passes through the longitudinal axis of the primary connector socket portion (4).

10. The expanded connector socket (6) of claim 8 or claim 9, **characterized in that** the primary connector socket is in conformity with ISO 12098 or ISO 7638-1.

11. The expanded connector socket (6) according to any of claims 8-10, **characterized in that** the separate secondary connector socket portions (5) are placed in the upper part of the primary connector socket portion (4).

12. The expanded connector socket (6) according to any of claims 8-11, **characterized in that** the twisted pair connector is suitable to connect with standardized LAN CAT6, CAT6a, CAT7 and/or CAT7a cable.

13. The expanded connector socket (6) according to any of claims 8-12 **characterized in that** the first and/or the second set of electrical connections between the tractor vehicle and the trailer vehicle forms part of a CAN network or an Ethernet network.

14. An expanded plug-socket connector system **characterized by** comprising the expanded connector plug (1) according to any of claims 1-7 and/or the expanded connector socket (6) according to claims 8-13.
